# EUROPEAN PATENT SPECIFICATION

(11) **EP 0 563 403 B1**
(45) Date of publication and mention of the grant of the patent: **30.05.2001**
(21) Application number: 92921817.0
(22) Date of filing: 21.10.1992
(51) Int. Cl.: G02F 1/1333, C09K 19/54

(54) **DISPLAY ELEMENT AND ITS MANUFACTURING METHOD**
ANZEIGEELEMENT UND SEIN HERSTELLUNGSVERFAHREN
ELEMENT D'AFFICHAGE ET SON PROCEDE DE PRODUCTION

(30) Priority: 22.10.1991 JP 27423291; 25.10.1991 JP 27912391; 17.12.1991 JP 33330291; 22.01.1992 JP 954092; 24.04.1992 JP 10689992; 01.06.1992 JP 14034392
(43) Date of publication of application: 06.10.1993
(73) Proprietor: SEIKO EPSON CORPORATION, Shinjuku-ku, Tokyo 163-0811 (JP)
(72) Inventor: KOBAYASHI, Hidekazu, Suwa-shi, Nagano-ken 392 (JP); SAMIZU, Kiyohiro, Suwa-shi, Nagano-ken 392 (JP)
(74) Representative: Hoffmann, Eckart, Dipl.-Ing.
(86) International application number: PCT/JP92/01367
(87) International publication number: WO 93/08497

(56) References cited:
- EP-A- 0 484 972
- EP-A- 0 488 116
- JP-A- 3 043 714
- JP-A- 3 119 315
- JP-A- 3 209 424
- JP-A- 53 055 047
- JP-A- 60 063 503
- JP-A- 61 047 427
- JP-B- 3 052 843
- LIQUID CRYSTALS vol. 11, no. 6 , June 1992 , LONDON GB pages 929 - 939 D.BRAUN 'Liquid Crystal /Liquid Crystalline Network Composite Systems'

## Description

### Field of the Invention

The invention relates to a polymer-diffused liquid crystal display element wherein polymers are dispersed in a liquid crystal, and more particularly it relates to a display element applicable to such man-machine interfaces as computer displays and televisions and production method of same.

### Background of the Invention

With the introduction of computers to society in recent years, the development of man-machine interfaces has accelerated. The development of displays is particularly fast paced, but currently the market depends primarily on twisted nematic liquid crystal display devices, which use two polarizing plates and whose display is dark. To solve these problems, polymer-diffused liquid crystal display devices have been developed recently. Since these systems do not use polarizing plates, the incident light can be used effectively. Particularly in display elements that include a dichroic dye, the appearance of the element is remarkable when used as a reflecting type. For example, Fergason capsulated liquid crystal containing dichroic dyes and diffused it in polymer (JP-A-3-52843; referred to as microcapsule normal PDLC below). Also, Doan, et al., proposed a production method whereby liquid crystal containing a dichroic dye and polymer precursors were combined and then phase separation of the liquid crystal and the polymer into a sponge state was performed by polymerization (JP-B-61-502128, etc.; referred to as polymer normal PDLC below). Further, using polymer precursors which take on a liquid crystal state, Hikmet, et al., of Philips Corporation produced a display element with a structure that was formed with the polymer in an oriented state achieved by irradiation with ultraviolet light while in a mixed condition with liquid crystal and in which the liquid crystal was contained in a gel network (Mol. Cryst. Liq. Cryst., 1992, Vol. 213, pp. 117-131; referred to as network type oriented PDLC below). Unlike the display element mentioned above, this element scatters white when an electric field is applied in this method. We, however, are independently developing technology that forms the polymers into grains while they are oriented (EP-A-0 488 116, etc.; referred to as grain-oriented PDLC below). However, sufficient brightness and contrast cannot be achieved in any of these display elements. Also, the drive voltage is not sufficiently low.

EP-A-0 484 972 (prior art according to Art. 54(3) EPC) discloses a display element wherein a liquid crystal is dispersed in mesomorphic polymer matrix.

The purpose of the invention is to offer a display element and a method for producing it wherein polymers are dispersed in the liquid crystal and that is bright and has good contrast and a low drive voltage.

### Disclosure of the Invention

This object is achieved with a display element as claimed in claim 1 and a method as claimed in claims 9 and 10, respectively. Preferred embodiments of the invention are subject-matter of the dependent claims.

In the display element of the invention, wherein polymers are dispersed in liquid crystal and the liquid crystal and polymers are oriented with respect to each other, the polymers used are made from polymer precursors one or more polymerizing parts and two or more aromatic rings without an alkyl group spacer between between a polymerizing part and aromatic rings.

Further, the above polymer precursors include as at least one component polymer precursors having a polymerizing part and a side chain part, and they may include polymer precursors having two or more polymerizing parts as at least one component. Here, the above polymer precursors are either ester derivatives with methacrylic acid or acrylic acid, or they are amide derivatives with methacrylic acid or acrylic acid. The above polymer precursors contain as at least one component a compound with an epoxy group. The above polymer precursors may also contain as at least one component a compound having at least two aromatic rings (at least one of the aromatic rings may be hydrogenated) and an ester group between the aromatic rings. The above polymer precursors may also contain as at least one component a compound having at least two aromatic rings (at least one of the aromatic rings may be hydrogenated) and a urethane group or an amide between the aromatic rings. The above polymer precursors may also contain as at least one component a compound having at least two aromatic rings (at least one of the aromatic rings may be hydrogenated) and at least one acetylene group between the aromatic rings. Also, a cyano group, a halogen group without fluorine or an aromatic ring may be bonded either directly or indirectly to the aromatic rings contained in the above polymer precursors. Also, an alkyl group may be bonded to the above polymer precursors. The above polymer precursors may also contain an optically active polymer compound. The above liquid crystal may also include a dichroic dye. The above liquid crystal may also include a chiral component. The above liquid crystal is a nematic liquid crystal.

### BRIEF EXPLANATION OF THE DRAWINGS

- FIG. 1: is a simple cross section of a horizontally oriented display element in the first embodiment of the invention.
- FIG. 2: is a simple cross section of a vertically oriented display element in the first embodiment of the invention.
- FIG. 3: is a simple cross section of an incline oriented display element in the first embodiment of the invention.
- FIG. 4: is a simple partial cross section of a display element with active elements in the ninth embodiment of the invention.
- FIG. 5: is a simple partial cross section of a display element with a color filter in the tenth embodiment of the invention.
- FIG. 6: is a simple cross section of a display element in the thirteenth embodiment of the invention.
- FIG. 7: shows the electro-optical characteristic of a display element in the thirteenth embodiment of the invention.
- FIG. 8: shows simple cross sections of a horizontally oriented display element in the fourteenth embodiment of the invention; where (A) shows a condition in which an electric field is not applied and (B) shows a condition in which an electric field is applied.
- FIG. 9: shows simple cross sections of a vertically oriented display element in the nineteenth embodiment of the invention; where (A) shows a condition in which an electric field is not applied and (B) shows a condition in which an electric field is applied.
- FIG. 10: shows two display elements mated together in the twentieth embodiment of the invention; where (A) shows a condition in which an electric field is not applied and (B) shows a condition in which an electric field is applied.

### Preferred Embodiments for Implementing the Invention

The invention is explained in more detail through embodiments according to the attached drawings.

### First Embodiment

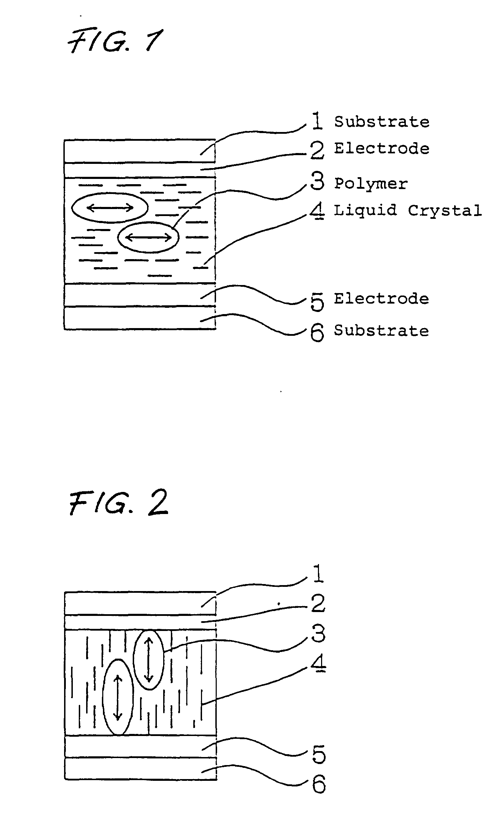

In this embodiment, a methacrylate ester or acrylate ester derivative is used as the polymer precursor, and it has two or more aromatic rings in the side chain, at least one of which may be hydrogenated, and a polymer precursor with an ester group is used between these aromatic rings. FIG. 1 shows a cross section of a horizontally oriented display element of the invention. FIG. 2 shows a cross section of a vertically oriented display element of the invention. In this way, the invention can be applied to both horizontally oriented and vertically oriented types. In this embodiment, a horizontally oriented type is mainly explained for the sake of convenience. In all of the embodiments below, vertical orientation of the element substrates may be performed and liquid crystal with a negative dielectric anisotropy may be used in the case of vertically oriented types. The production method of the element is as follows. First, electrodes 2 and electrodes 5 are formed the surfaces of substrate 1 and substrate 6, which have flat surfaces. Either of these electrodes may be reflective. The substrate surfaces undergo orientation treatment. The two substrates are fixed such that the gap between them is 5 *µ*m. This need not be 5 *µ*m and may be decided based on the application. For example, since, if the device is used as a transmission type, the light path length is half that of a reflective type, sufficient contrast cannot be obtained unless the gap is doubled from 5 *µ*m to 10 *µ*m.

A nearly transparent element could be produced by injecting 4-benzoyloxy phenyl methacrylate 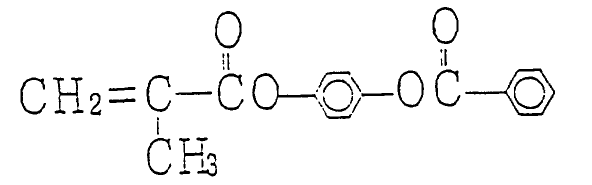 as the precursor of polymers 3 and liquid crystal 4 (mixture of PN002, produced by Rodic Co., 1% S-1011 (produced by Merck) as a chiral component and 1.5% S-428, produced by Mitsui Toatsu Senryo K.K., as a dichroic dye) in a 1:9 ratio and orienting this mixture, after which phase separation of the liquid crystal and polymers was performed by irradiation with ultraviolet light.

The element was measured. A reflective plate was disposed behind the display element and an AC electric field with a frequency of 10 kHz was applied between the two electrodes, and then the reflectivity of light was measured while varying the voltage. At 3.3 V, the display condition started to invert (5% reflectivity), and at 4.8 V it became saturated (190% reflectivity). Compared to the prior art, the drive voltage was lower, though only slightly, and the degree of scattering was improved. Reflectivity was measured relative to the reflectivity of white paper which was defined to be 100%. By disposing the element so that the direction of orientation of the polymers at either the front surface of the element or the rear surface of the element is perpendicular to a plane that includes the direction of incident light and the line normal to the element surface, reflectivity is improved. In contrast to this, when we used the photo-curing biphenyl derivative 4-biphenyl methacrylate, which we used previously, as the polymer precursor to produce an element by the same method as this embodiment, the display condition began to invert (5% reflectivity) at 3.5 V and it became saturated (180% reflectivity) at 5.0 V. Here, 100% is the reflectivity when a sheet of white paper was disposed in place of the display element. It is clear that the method of this embodiment improves scattering at a low voltage.

The characteristics of the element were measured using a transmission type optical system. The display element was produced using transparent electrodes for the electrodes of the display element substrate and without injecting a dichroic dye, and the brightness of the light transmitted by the element was measured relative to the brightness of the incident light, which was defined to be 100%. At this time, an aperture was disposed directly in front of the light detector to eliminate scattered light from the element. The diameter of the aperture was set so that the viewing angle of the element was 3 degrees. The electric field applied to the display element was applied under the conditions shown above. The display condition began to invert (85% transmissivity) at 3.5 V, and at 5.0 V it became saturated (5% transmissivity). As shown here, application can be made to both transmission and reflective types.

Next, an example that uses a display element wherein an ester group is included between a biphenyl group and a phenyl group is shown as an example that includes three or more aromatic rings. For example, 4-(4'-biphenyl carboxy) phenyl methacrylate is used.

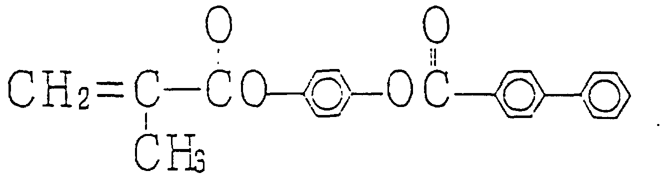

The element was produced by the same method as described above, and it was driven in the same manner. At 4 V, the display condition began to invert (5% reflectivity), and at 5.5 V it became saturated (190% reflectivity). The same effect was demonstrated with a transmission type.

Next is an example wherein a naphthalene group is included in the polymer precursor, and the direction in which the ester group is added is opposite. Other than the polymer precursor, the element was produced under the conditions described above. Here, 4-(2'-naphthoxy carbonyl) phenyl methacrylate was used as the ultraviolet-curing polymer precursor.

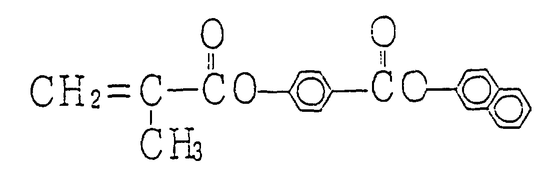

At 3 V, the display condition began to invert (5% reflectivity), and at 4 V it became saturated (80% reflectivity). The same effect was demonstrated with a transmission type.

Above, the same effect is achieved even with polymer precursors other than described above if the polymer precursor has a basic skeleton indicated by 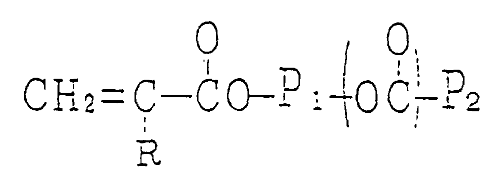 where, P₁ and P₂ include aromatic rings and the group in the parentheses may be bonded in reverse, and R is H or CH₃.

Here, the polymerizing part may be acrylic, methacrylic, crotonic acid, fumaric acid, maleic acid, a vinyl group, an epoxy group or other polymerizing group used in polymers. Of course, the R in the chemical formula may be an alkyl group or other substituent. Also, a polymer precursor with a polymerizing part that is hardened by heat or an electron beam may be used. Regarding the aromatic rings, at least one can be hydrogenated. For example, 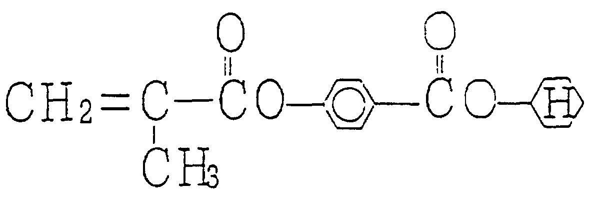 may be used. The aromatic rings are not limited to phenyl groups, and biphenyl, terphenyl, naphthalene, anthracene and other polycyclic aromatic rings can be used. Para-substitution was used as the substitution mode for the aromatic rings, but they are suitable for the display element with meta-substitution or ortho-substitution. However, the degree of scattering readily drops. Further, though there are no substituents in the aromatic rings other than bonds with other aromatic rings, superior characteristics can be manifested by inserting such substituents as a cyano group, a halogen group, an alkyl group or an alkoxy group as described below. Also, at least one of the structures of the urethane group, amide group or acetylene group shown below can be employed. Fluorine can also be substituted for H in the compound.

Here, ultraviolet light is used as the means for polymerization, and its wavelength was from 300 to 400 nm and intensity was 2 mW/cm², but any wavelength and intensity can be used that will polymerize the polymer precursor. Particularly when a weak light is irradiated for a long period, it becomes more difficult for dichroic dye to be contained in the polymers when dichroic dye is used, thus improving the characteristics. When an initiator or sensitizer is mixed in, polymerization can be effectively promoted. Polymerization can also be performed by an electron beam. For example, sufficient polymerization can be achieved by using an electron beam accelerated at 250 kV and making the thickness of the substrate on the side on which the electron beam is incident sufficiently thin (e.g., 100 microns). It is also possible to mix in the polymerization initiator and perform polymerization with heat.

Orientation treatment may be performed by any means used in the prior art that orients the liquid crystal phase, such as rubbing the bare substrate, forming an orientation film and rubbing it, oblique vapor deposition, using an LB film or using a vertical orientation agent. Also, orientation treatment of only the substrate on one side is effective. The direction of orientation treatment of the substrate can be any direction, and the orientation directions of the front substrate and the rear substrate can be different, but it is necessary to optimize the direction to match the direction of incident light when used and the diffusion profile required for the element. Also, as described below, by inclining the direction of orientation of the polymers with respect to the substrate surface and reducing the drive voltage, the direction of distinct visibility can be optimized.

The liquid crystal used here should have as large an index of refractive anisotropy An as possible. Also, the dielectric anisotropy of the liquid crystal may be positive. The amount of liquid crystal contained should ideally be 50% to 97% with respect to the polymer precursor. When there is less liquid crystal than this, it does not respond to the electric field, or if there is more, then contrast cannot be obtained. Also, by using liquid crystal with a high resistivity, it can be driven with active elements.

The dichroic dye used need not be that shown here, and the content ratio can be optimized depending on the application. If dichroic dye was not mixed in, a mode was possible in which the element was transparent when the electric field was OFF and scattered white when the electric field was ON.

Here, a chiral component was mixed in, but it does not matter which chiral component is used and the amount mixed in can be determined based on the application. When a lot is mixed in, the drive voltage must be increased, but a memory characteristic is manifested. The element will also function even if a chiral component is not combined.

### Second Embodiment

In this embodiment, the polymer precursors are an ester methacrylate or ester acrylate derivative having two or more aromatic rings as a side chain, at least one of the aromatic rings may be hydrogenated and a polymer precursor with a urethane group or an amide group between these aromatic rings is used. The polymer precursor used was 4-methacryloyloxy phenyl-phenylcarbamate.

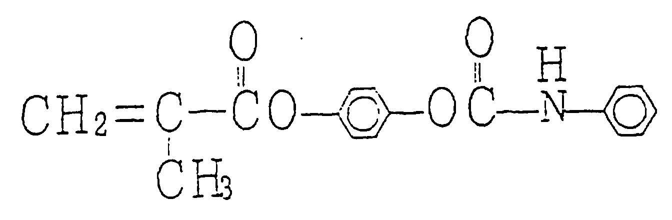

The element was produced in the same way as in the first embodiment.

The electro-optical characteristics of the element were measured by the method of the first embodiment. Display began to invert at 3.5 V (5% reflectivity), and at 5 V it became saturated (180% reflectivity).

Next is an example in which an amide group is used as the polymer precursor. Phenylcarbamoyl phenyl-4-methacrylate 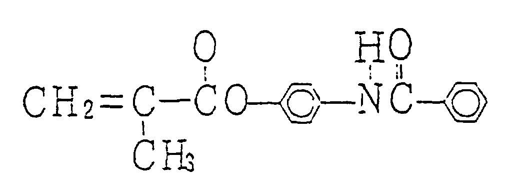 was used as the polymer precursor and the element was produced under the same conditions as in the first embodiment.

The electro-optical characteristics of the element were measured by the method of the first embodiment. Display began to invert at 3.5 V (5% reflectivity), and at 5 V it became saturated (180% reflectivity).

In addition to the polymer precursors described above in this embodiment, the same effect can be obtained with any polymer precursor having the following basic skeleton. 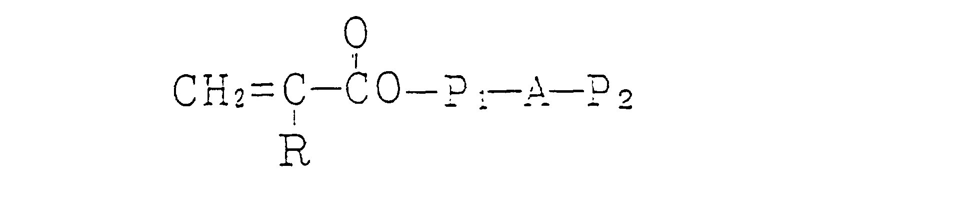 where, P₁ and P₂ include aromatic rings,
A is either OCONH or NHCO,
these may be bonded in reverse, and
R is H or CH₃.

Here, the polymerizing part may be acrylic, methacrylic, crotonic acid, fumaric acid, maleic acid, a vinyl group, an epoxy group or other polymerizing group used in polymers. Of course, the R in the chemical formula may be an alkyl group or other substituent. Also, a polymer precursor with a polymerizing part that is hardened by heat or an electron beam may be used. Regarding the aromatic rings, at least one can be hydrogenated. For example, 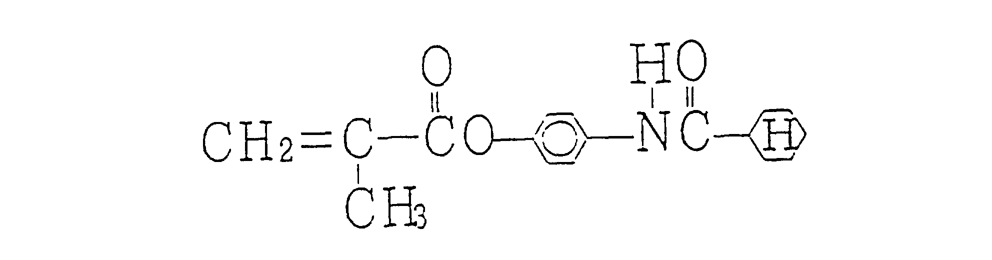 may be used. The aromatic rings are not limited to phenyl groups, and biphenyl, terphenyl, naphthalene, anthracene and other polycyclic aromatic rings can be used. Para-substitution was used as the substitution mode for the aromatic rings, but they will be suitable for a display element with meta-substitution or ortho-substitution. However, the degree of scattering readily drops. Further, though there are no substituents in the aromatic rings other than bonds with other aromatic rings, superior characteristics can be manifested by inserting such substituents as a cyano group, a halogen group, an alkyl group or an alkoxy group as described below. Also, at least one of the structures of the ester group shown in the first embodiment or the group shown below can be employed. Fluorine can also be substituted for H in the compound.

The other element component parts, conditions for production and applications are the same as in the first embodiment.

### Third Embodiment

In this embodiment, the polymer precursors are an ester methacrylate or ester acrylate derivative having two or more aromatic rings as a side chain, at least one of the aromatic rings may be hydrogenated and there is an acetylene group between these aromatic rings. First is an example that uses a polymer precursor with two polymerizing parts. The polymer precursor used was di-(para-methacryloyloxy phenyl) acetylene 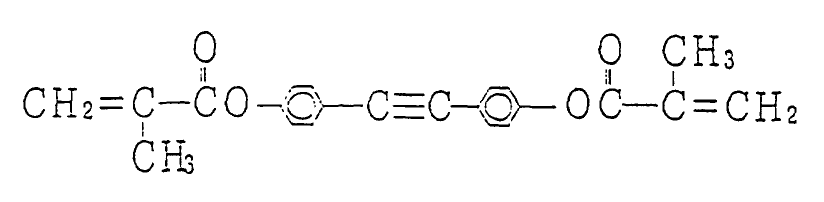 and other production conditions were the same as in the first embodiment. The liquid crystal and polymers underwent phase separation.

The electro-optical characteristics of the display element obtained in this manner were measured by the method of the first embodiment. Display began to invert at 4 V (5% reflectivity), and at 6 V it became saturated (210% reflectivity).

Next is an example in which an acetylene compound with one polymerizing part is used. Para-methacryloyloxy tolan 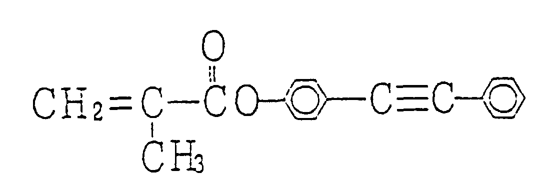 was used. Production conditions for other than the polymer precursor were the same as in the first embodiment.

The electro-optical characteristics were measured by the method of the first embodiment. Display began to invert at 3.5 V (5% reflectivity), and at 5.5 V it became saturated (200% reflectivity).

Next is an example that uses a polymer precursor having two acetylene bonds and containing no alkyl side chain. The element was produced according to the conditions in the first embodiment. Here, 1-(4'-methacryloyloxy phenyl)-4-phenyl-1, 3-butadiene 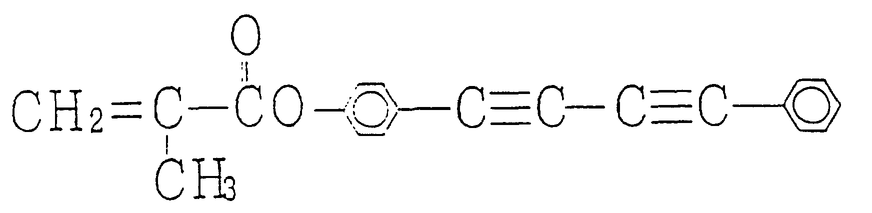 was used.

Next, the electro-optical characteristics of the element were measured by the same method as in the first embodiment. Display began to invert at 3.5 V (5% reflectivity), and at 5.5 V it became saturated (200% reflectivity).

The formula for the polymer precursor used here can be written as 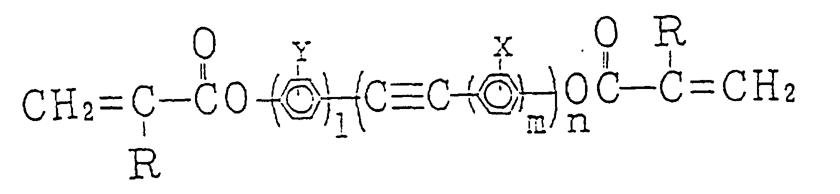 where, X, Y are substituents,
l, m are positive integers (including 0),
n is a positive number, and
R is H or CH₃.
when it has two polymerizing parts and as 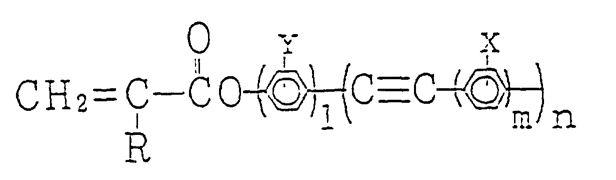 where, X, Y are substituents,
l, m are positive integers (including 0),
n is a positive number, and
R is H or CH₃.

when it has one polymerizing part. Combinations of X, Y, l, m and n make it possible to use various compounds. For example, assuming n = 2, two acetylene skeletons can be joined.

When n is plural, X is repeated a plural number of times, but of course the skeleton can be changed each time. The same is true with m. In addition to aromatic rings and an acetylene skeleton, the polymer precursor may have a skeleton that increases the index of refractive anisotropy. Further, these polymer precursors may be mixed with other polymer precursors, e.g., single-function polymer precursors such as biphenyl methacrylate. Here, the polymerizing part may be acrylic, methacrylic, crotonic acid, fumaric acid, maleic acid, a vinyl group, an epoxy group or other polymerizing group used in polymers. Of course, the R in the chemical formula may be an alkyl group or other substituent. Also, a polymer precursor with a polymerizing part that is hardened by heat or an electron beam may be used. Regarding the aromatic rings, at least one can be hydrogenated. The aromatic rings are not limited to phenyl groups, and biphenyl, terphenyl, naphthalene, anthracene and other polycyclic aromatic rings can be used. Para-substitution was used as the substitution mode for the aromatic rings, but they are suitable for the display element with meta-substitution or ortho-substitution. However, the degree of scattering readily drops. Further, though there are no substituents in the aromatic rings other than bonds with other aromatic rings, superior characteristics can be manifested by inserting such substituents as a cyano group, a halogen group, an alkyl group or an alkoxy group as described below. Also, at least one of the structures of the ester group, amide group or urethane group shown above can be employed. Fluorine can also be substituted for H in the compound.

In this embodiment, two-function and single-function polymer precursors were shown, but by mixing two-function polymer precursors with single-function polymer precursors, a display element with a low drive voltage and good heat resistance and durability can be produced.

### Fourth Embodiment

This embodiment demonstrates an example in which the polymer precursor is an amide of acrylic acid or methacrylic acid. Biphenyl methacrylic amide 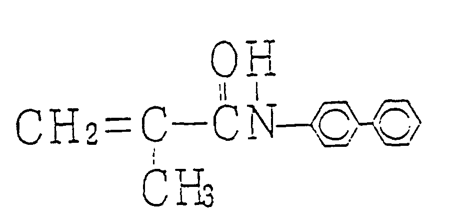 was used as the polymer precursor and the element was produced with the same conditions as in the third embodiment.

The electro-optical characteristics of the element were measured by the method of the first embodiment. Display began to invert at 3.5 V (5% reflectivity), and at 5 V it became saturated (180% reflectivity).

N-methyl biphenyl methacrylic amide, etc., can be used similarly.

As shown by 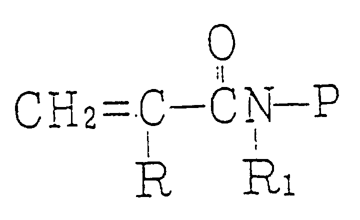 where, P includes an aromatic ring, and R, R₁ are H or CH₃.

The side chain can have an aromatic ring, and even if there are plural aromatic rings, the display element will function.

Even in embodiments other than this embodiment, if the ester group that bonds the polymerizing part and the side chain is changed to an amide group, it can similarly be used as a polymer precursor. The display element can be produced. The aromatic rings are not limited to phenyl groups, and biphenyl, terphenyl, naphthalene, anthracene and other polycyclic aromatic rings can be used. Para-substitution was used as the substitution mode for the aromatic rings, but they are suitable for the display element with meta-substitution or ortho-substitution. Though there are no substituents in the aromatic rings other than bonds with other aromatic rings, superior characteristics can be manifested by inserting such substituents as a cyano group, a halogen group, an alkyl group or an alkoxy group as described below. Also, at least one of the structures of the ester group, amide group, urethane group or acetylene group shown above can be employed. Fluorine can also be substituted for H in the compound. Here, the polymerizing part may be acrylic, methacrylic, crotonic acid, fumaric acid, maleic acid, a vinyl group, an epoxy group or other polymerizing group used in polymers. Of course, the R in the chemical formula may be an alkyl group or other substituent. Also, since N is included in this compound, H, CH₃, an alkyl group or other substituent can be introduced for N. Of course, it may be a polymerizing substituent.

### Fifth Embodiment

This embodiment demonstrates an example wherein the polymer precursor is optically active. The polymer precursor used was 4'-(2''(S)-methyl propyloxy)biphenyl-4-methacrylate 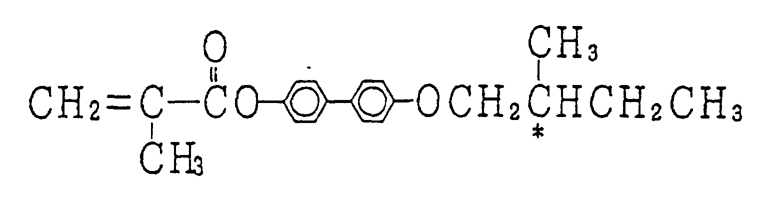 and the liquid crystal material, element and production conditions were the same as in the first embodiment. The electro-optical characteristic of the element was measured. This measurement showed that the display condition began to invert at 3 V (5% reflectivity) and became saturated at 5 V (200% reflectivity).

Here, even if the polymer precursor is other than that used in this embodiment, the same effect can be demonstrated as long as it is optically active. For example, precursors that satisfy the general formula 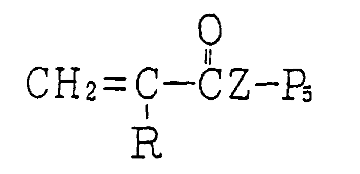 where, R is H or CH₃,
P₅ is optically active and includes an aromatic ring, and Z is O or N.

e.g., 4-(2'(S)-methyl propyloxy)phenyl methacrylate 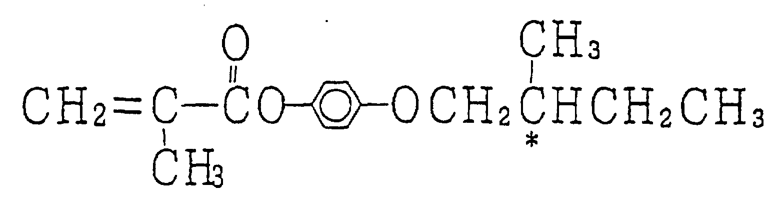 can be used. That is, substituents with a chiral center can be introduced to the compounds shown in all of the embodiments of the invention. The substitution mode used here for the aromatic ring was para substitution, but meta substitution or ortho substitution can be also be used. Also, substitution can be performed at the same time with another substituent. An optically active polymer precursor can be used as one component of the polymer precursor. Here, the polymerizing part may be acrylic, methacrylic, crotonic acid, fumaric acid, maleic acid, a vinyl group, an epoxy group or other polymerizing group used in polymers. Of course, the R in the chemical formula may be an alkyl group or other substituent.

Next is an example wherein an optically active polymer precursor is used as one type. A 1:1 mixture of 4'-(2''(S)-methyl propyloxy)biphenyl-4-methacrylate and 4-biphenyl methacrylate was used as the polymer precursor. The remaining configuration and production method and conditions were the same as in the first embodiment.

The element produced in this manner demonstrated a characteristic between that of above example of the embodiment and a prior art example. The molecular rotary power of the optically active polymer precursor differs depending on its skeleton. Since the drive voltage increases if the molecular rotary power is too large, it is necessary to dilute with an optically active polymer precursor as shown here.

An optically S material was used as the optically active material in the embodiment, but an optically R material can also be used similarly. Also, though a chiral component was not included in the liquid crystal shown here, a chiral component can be mixed in to improve contrast and brightness.

### Sixth Embodiment

This embodiment demonstrates an example in which a two-function polymer precursor and a single-function polymer precursor are mixed together. The polymer precursor used here was a mixed stock (2:1 here) of cyano biphenyl methacrylate and phenyl di-methacrylate

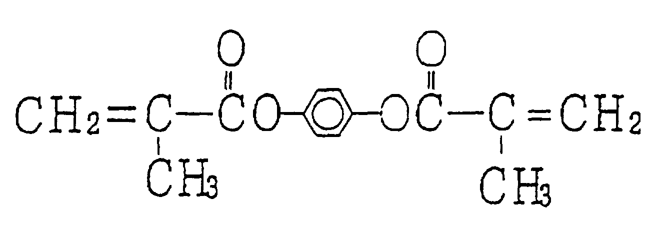

The mix ratio is not limited to this. The liquid crystal, element and production conditions were the same as in the first embodiment. By this means, the thermal resistance and reliability of the electro-optical conditions were improved without sacrificing the characteristics of the single-function polymer precursor (in the prior art, the polymers melted at 100°C, but here they do not melt up to 120°C). The same effect was observed with the polymer precursors of all the embodiments of the invention. The two-function polymer precursors that can be mixed with the single-function polymer precursor include 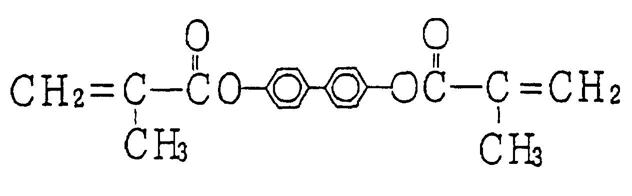 polymer precursors that take on a liquid crystal phase such as 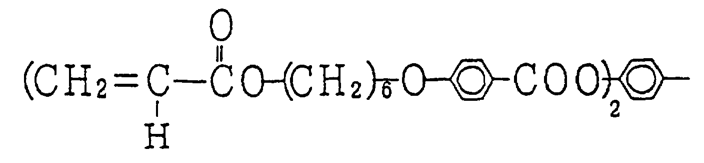 used by Hikmet, et al., and compounds such as 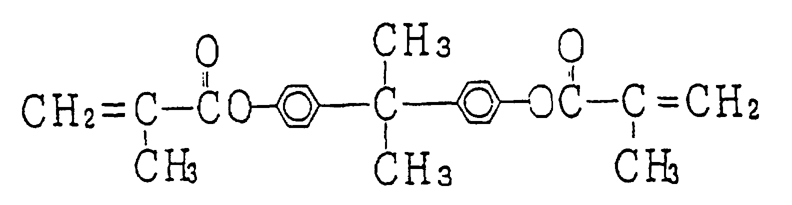 with a bis-phenol A skeleton. In this case, an acrylic or methacrylic group can be attached at either end of the alkyl chain as in 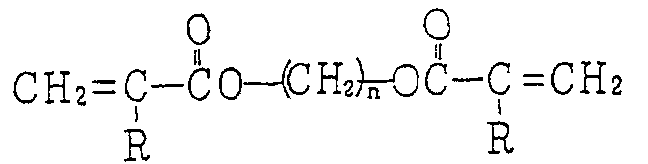 R is H or CH₃, and
n is a positive number.

Here, the polymerizing part may be acrylic, methacrylic, crotonic acid, fumaric acid, maleic acid, a vinyl group, an epoxy group or other polymerizing group used in polymers. Of course, the R in the chemical formula may be an alkyl group or other substituent. Also, the polymer precursor need not have two functions, but rather it may be a multifunction polymer precursor with three or more functions (e.g., M7100 produced by Toa Gosei K.K.).

### Seventh Embodiment

This embodiment demonstrates an example in which two types of polymer precursors are used. The same substrate as in the first embodiment was used. Here, the precursors 4-benzoyloxy phenyl methacrylate and methacryloxy phenyl-4'-methyl phenylcarbamate 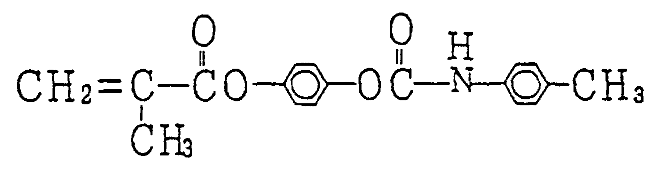 were used and were mixed in a ratio of 1:1 (W:W), and the element was produced with the same conditions as the first embodiment.

The electro-optical characteristics of the element were measured by the method of the first embodiment. Display began to invert at 3.5 V (5% reflectivity), and at 5 V it became saturated (180% reflectivity).

When two or more types of polymer precursors are mixed, the polymer precursors shown in all of the embodiments of the invention can be used as the mixed precursors. Also, the amounts mixed and the composition ratio with liquid crystal are not limited by this embodiment and must be optimized as required. Multifunction polymer precursors such as those in the sixth embodiment may be mixed with a single-function polymer precursor mixture such this. Here, the polymerizing part may be acrylic, methacrylic, crotonic acid, fumaric acid, maleic acid, a vinyl group, an epoxy group or other polymerizing group used in polymers.

### Eighth Embodiment

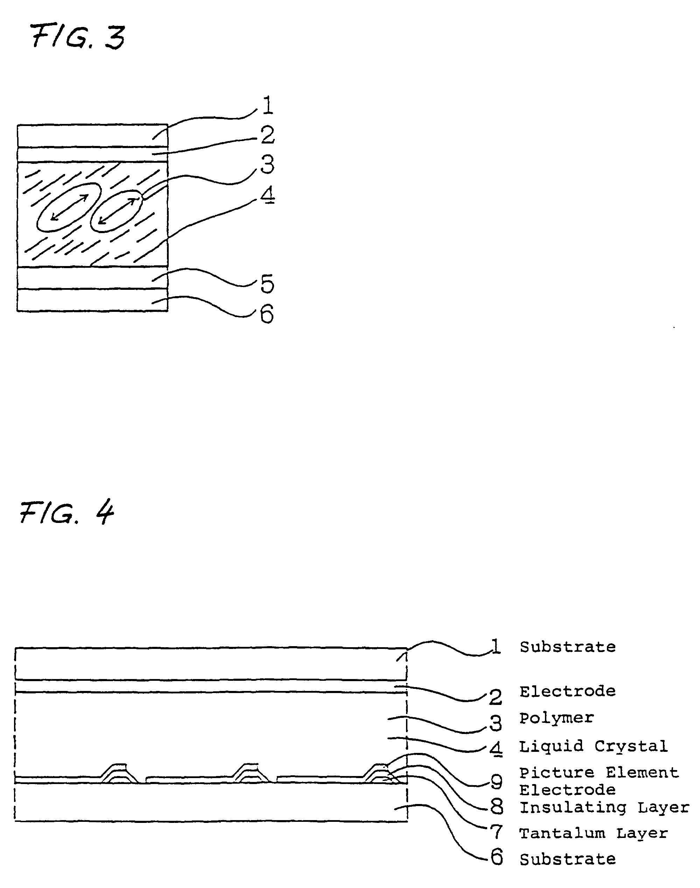

This embodiment demonstrates an example wherein the direction of orientation of the polymers is inclined with respect to the substrate surface. FIG. 3 shows a cross section of the display element of this embodiment. The production method of the element is explained below. JAS23 and JIB (both produced by Nihon Gosei K.K.) in a mix ratio of 1:1 were applied as a pre-tilt orientation treatment to the surfaces of substrates 1 and 6 on which electrodes 2 and 5 were formed and then underwent horizontal orientation treatment after drying. The display element was produced according to the method in the first embodiment using a substrate prepared in this manner.

Display began to invert at 3 V (5% reflectivity) and became saturated at 4 V (170% reflectivity). As you can see, the drive voltage is lower. The polymer precursor used here is only representative of the polymer precursors of the invention and any of the polymer precursors of the invention can be used. Also, this embodiment can be applied to all of the embodiments of the invention.

### Ninth Embodiment

In this embodiment, an example is demonstrated wherein the polymer precursors described above are used, RDP00536 (Rodic Co.), which has a high resistance, is used as the liquid crystal, S-1011 (Merck Co.) is used as the chiral component, S-344 (Mitsui Toatsu Senryo K.K.) is used as the dichroic dye, and active elements are used on the element substrate.

First, the liquid crystal components injected between the substrates is explained. S-1011 and S-344 were mixed with the liquid crystal RDP00536 shown above in ratios of 0.5% and 1.5%, respectively, and then the 4-benzoyloxy phenyl methacrylate used in the first embodiment and tetrafluoro-diphenyl methacrylate were mixed in ratios of 8% and 2%, respectively.

Next, the active element-equipped substrates between which these liquid crystal components are injected are explained. FIG. 4 shows a partial cross section of the display element of this embodiment. An example is shown in which MIM elements are used as the active elements. ITO was formed as the transparent electrode 2 on the substrate 1, and then the surface underwent orientation treatment. After a tantalum layer was formed on the substrate 6, the surface was oxidized to form an insulation layer 8, on which reflective picture element electrodes 9 (may receive non-directional reflectivity treatment as required) were formed. A protective layer may be formed on the element surface to protect the active elements. That surface then underwent orientation treatment. Substrate 1 and substrate 6 were separated by a gap of about 5 µm with the electrode surfaces facing each other, and then the substrates were fixed in place such that the directions of orientation on the upper and lower substrates were nearly parallel. Here, the active element substrate underwent reflectivity treatment and the opposing substrate was made transparent, but the opposing substrate may undergo reflectivity treatment and the element substrate may be made transparent. Also, though the reflective layer and the electrodes were formed as one unit here, the electrodes and reflective layer may be formed separately.

The liquid crystal components described above were injected in the empty panel produced in this manner, and the polymer precursors were polymerized by ultraviolet light irradiation, whereby the liquid crystal and polymers were separated.

When a signal for MIM element drive (selection period 60 ms, non-selection period 16 ms) was applied to a display element produced in this manner, display inverted at a signal peak value of 35 V with 150% reflectivity. The reason for the low reflectivity compared with the previous embodiments is because the numerical aperture of the active element substrate is only 70%.

Any kind of liquid crystal can be used as long as it has high retention, its resistivity is essentially high (greater than 1 x 10¹⁰ Ûcm), it has a large dielectric constant, and has a large birefringence.

The chiral component is not limited to that used here. A polymer precursor with a chiral center such as that shown in the fifth embodiment can be used as the chiral component. Also, the mix ratio is not limited to that shown here, but if too much is included, there is a tendency for the hysteresis to increase and raise the drive voltage.

The dichroic dye should have little absorption in the ultraviolet band and a large two-color ratio. The color of the dye can be selected as desired according to the application. The amount of dye contained is not limited to that shown here, but if too much is included, the dye may crystallize or darken the display.

A polymerization initiator was not used here, but one can be used together with an optical sensitizer. However, care should be taken since the resistivity tends to drop easily.

Any of the polymer precursors shown in all of the embodiments of the invention can be used as the polymer precursor here. Particularly if two-function or multifunction polymer precursors are mixed, burn-in of the display condition or other phenomena do not occur as easily even if the polymer precursor content is reduced. The content of polymer precursor need not be that shown here, but if the content is too small, scattering is weakened, and if too great, the drive voltage increases.

The polymerization conditions can be those of the first embodiment. However, polymerization should be done with care since the resistivity drops easily. A light intensity of 3 mW/cm² was used, but it is not limited to that. If the light intensity is weakened, the polymerization time is lengthened, and if the light intensity is strengthened, the polymerization time is shortened. However, if the light intensity is too strong, the resistivity drops easily. Polymerization is simplified if slightly heated (20° to 50°C) at the time of photopolymerization.

Aluminum was used here for the reflective electrodes, but silver, nickel, chrome, etc., can be used for the electrodes as long as they reflect light. Also, the electrodes can be made transparent and a reflective back plate 9 can be used on the back of the element.

MIM elements were used here as the active elements, but TFT elements or other elements capable of driving liquid crystal can be used as shown below.

Orientation treatment may be performed by any method that orients the liquid crystal. As shown in the eighth embodiment, the liquid crystal may, of course, be inclined with respect to the substrate surface. Vertical orientation treatment is also okay. However, in this case, a liquid crystal with a negative dielectric anisotropy must be used. The direction of orientation treatment may be optimized depending on the application since the direction of distinct visibility changes.

In this embodiment, reflectivity treatment need not be performed, and the element may be used as a transmission type display element or a light bulb if dye is not included.

### Tenth Embodiment

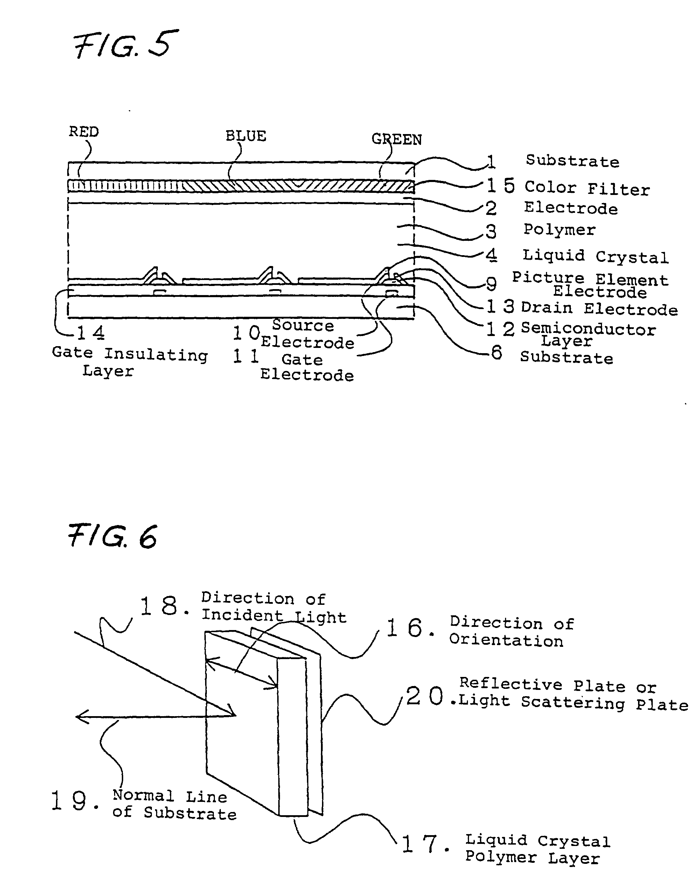

Next, an example is demonstrated wherein a color filter is used in conjunction with active elements. FIG. 5 is a partial cross section of a color display element that uses TFT elements. Actually, picture elements corresponding to each color like those shown here are arranged in a mosaic or lattice. The liquid crystal 4 and polymer layer 3 of the ninth embodiment can be used as is. The TFT element section is explained below. First, gate electrodes 11 were formed on the substrate 6, and then on top of that a gate insulation layer 14, a semiconductor layer 12, drain electrodes 13, source electrodes 10 and picture element electrodes 9, which also serve as the reflective layer (may undergo non-directional reflectivity treatment as required), were formed. A protective layer may be formed on the picture element electrodes in order to protect the active elements. The top of the picture element electrodes then underwent orientation treatment. Next, the transparent electrode 2 was formed on the opposing substrate 1 after the color filter 15 was formed, and the top of this then underwent orientation treatment.

As described above, the two substrates are produced with the electrodes on the inside, and they are then mated together such that the liquid crystal layer is about 5 microns thick. The liquid crystal layer need not be 5 microns, but if it is too thick, the drive voltage increases and it cannot be driven by TFT elements. Here, the active element substrate underwent reflectivity treatment, but the opposing substrate may undergo reflectivity treatment. Also, the color filter may be positioned on the front side or on the reflective substrate side of the display element. It may also be positioned between the substrates or between the electrodes and the liquid crystal layer.

The element was produced by injecting a mixture of liquid crystal corresponding to the display mode and polymer precursors in this gap and applying an external field when necessary.

The liquid crystal, polymer precursor, dichroic dye, chiral component and the production conditions used here can be those used in the ninth embodiment.

In this embodiment, reflectivity treatment need not be performed, and the element may be used as a transmission type display element or a light bulb if dye is not included.

Above, an example that used active elements was shown, but by means of this embodiment, production of a reflective type, large capacity color display element is facilitated, and full color display is also facilitated.

In addition to TFT elements and MIM elements, TFT and MIM elements with configurations different from those shown here can be used as the active elements in this embodiment, and active elements that employ a ferro-electric substance can be used in the exact same manner.

### Eleventh Embodiment

In this embodiment, an example is demonstrated wherein the polymer precursor used in the previous embodiment is polymerized in advance and is made compatible with the liquid crystal by heating, and the polymers are precipitated from the liquid crystal by cooling.

The polymer precursor used was 4-benzoyloxy phenyl methacrylate and the liquid crystal was TL202 produced by Merck Co., and BDH Co.'s CB15 and Mitsui Toatsu Senryo K.K.'s S-428 were mixed with these as the chiral component and the dichroic dye, respectively. First, the polymer precursors were polymerized by ultraviolet light to form the polymers. These were heated to 120°C to make them compatible with the liquid crystal, and then they were injected between two electrode-equipped substrates that had undergone orientation treatment. This panel was cooled at a rate of 1°C/min to precipitate the polymers in an oriented condition. The slower cooling is performed the better, and if cooled too fast, the polymers are precipitated without being oriented. In this embodiment, the element will function as long as the ratio of polymers to liquid crystal is between 3:97 and 50:50. Also, the chiral component and dye need not be included. Other than those shown here, the polymer precursors, liquid crystal, chiral component, and dichroic dye shown in the previous embodiments may be used. Here, two substrates were used, but the display element may be produced by applying the above to one substrate and treating them similarly and then forming the opposing electrode. It is also possible to make the element by mating single substrates on which liquid crystal polymer layers have been formed. Also, active elements can be used as the substrate shown above, whereby large capacity display elements can be produced. It is also possible to combine a color filter as shown in a previous embodiment to produce a color display.

### Twelfth Embodiment

In this embodiment, an example is demonstrated wherein the polymer precursor used in the previous embodiment is polymerized in advance and made compatible with the liquid crystal by heating, after which the polymers are precipitated out from the liquid crystal by cooling. The polymer precursor used was 4-(p-pentylbenzoyloxy) phenyl methacrylate and the liquid crystal was Merck Co.'s MJ90657, and Chisso K.K.'s CM20 and Mitsui Toatsu Senryo K.K.'s S-344 are mixed with these as the chiral component and dichroic dye, respectively. First, the polymer precursors were polymerized by ultraviolet light to form the polymers. These and the liquid crystal were made compatible with methyl ethyl ketone as a solvent and then spread out on an electrode-equipped substrate that had undergone orientation treatment. This panel was dried by heating at 50°C to remove the solvent, and the polymers were precipitated out in an oriented condition. Following this, the opposing electrodes or opposing electrode-equipped substrate were mated with this substrate to form the element.

If the oriented condition of the polymers appears to be poor, a heating-cooling process such as that shown in the eleventh embodiment may be performed after the solvent has been removed.

In this embodiment, the element will function as long as the ratio of polymers to liquid crystal is between 3:97 and 50:50. Also, the chiral component and dye need not be included. Other than those shown here, the polymer precursors, liquid crystal, chiral component, and dichroic dye shown in the previous embodiments may be used. Here, two substrates were used, but the display element may be produced by applying the above to one substrate and treating them similarly and then forming the opposing electrode. It is also possible to make the element by mating single substrates on which liquid crystal polymer layers have been formed. Also, active elements can be used as the substrate shown above, whereby large capacity display elements can be produced. It is also possible to combine a color filter as shown in a previous embodiment to produce a color display.

### Thirteenth Embodiment

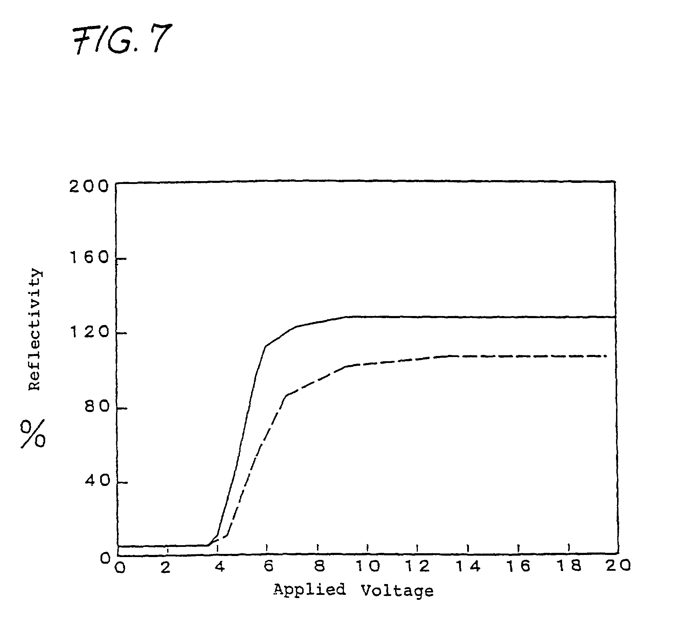

In this embodiment, an example is demonstrated wherein, of the substrates that orient the liquid crystal and polymers, direction 16 of orientation treatment of at least the substrate on the light incident side of the element is perpendicular to the plane containing principal direction 18 of light incidence and normal direction 19 of the substrate. A simple arrangement plan is shown in FIG. 6. In this embodiment, direction 16 of orientation treatment of the rear substrate is the same as the front substrate, and for the sake of comparison, an example is shown wherein the display element is disposed such that the direction of orientation treatment is turned 90 degrees with respect to this embodiment. The configurations and production methods of all the embodiments of the invention can be used for the display element. The electro-optical characteristics of a display element in which a dichroic dye and chiral component are mixed and which employs a reflective plate 20 are shown in FIG. 7. The solid line indicates this embodiment and the dashed line indicates the comparison example. As shown here, the electro-optical characteristics were improved by about 30 percent. In addition to making the direction of orientation treatment on the rear substrate the same as on the front substrate, an effect like that shown here can be obtained with any direction.

### Fourteenth Embodiment

In this embodiment, an example is demonstrated wherein an optical phase shift plate and a reflective plate or a light scattering plate 20 are disposed on the back of the substrates that sandwich the layer in which the liquid crystal and polymers are oriented and dispersed.

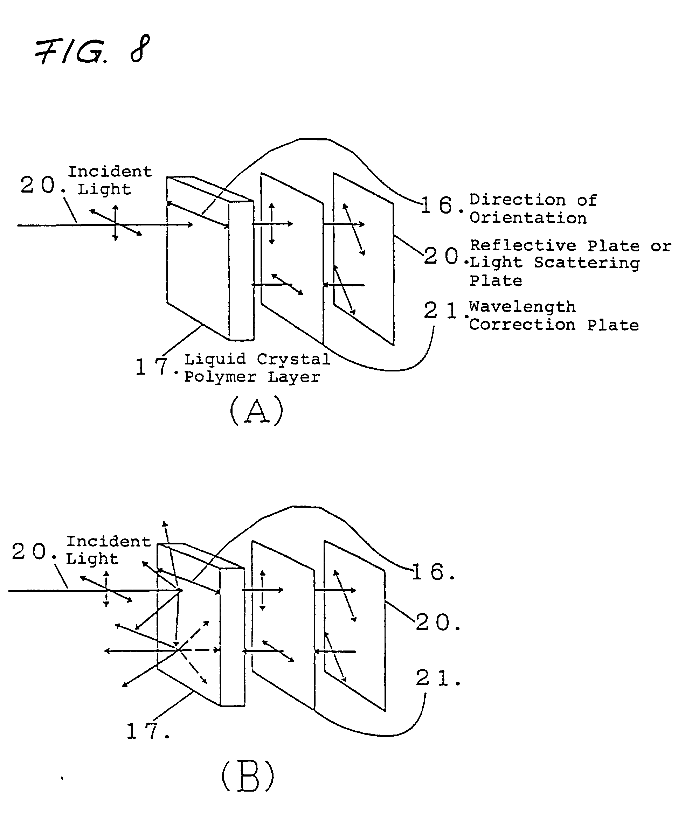

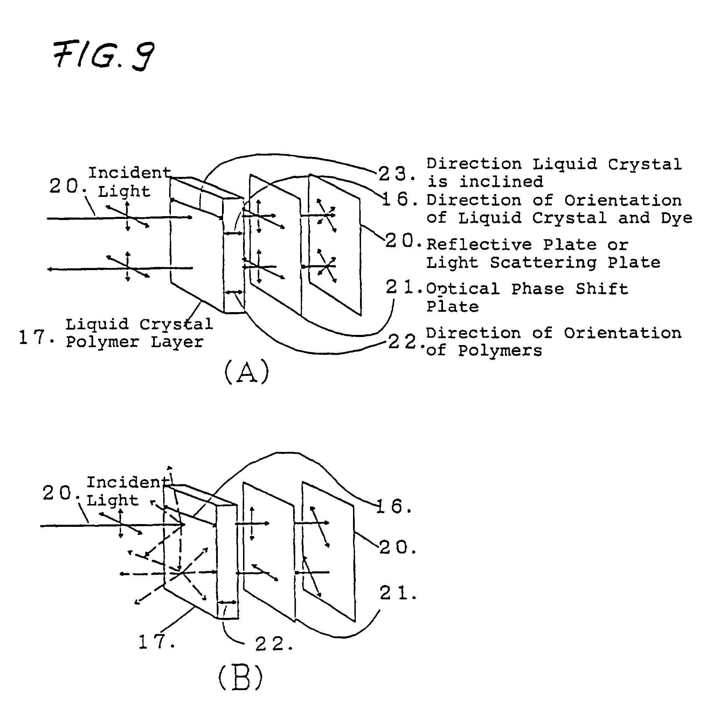

FIG. 8 shows an example wherein the liquid crystal and polymers are oriented horizontally with respect to the substrate surface, and FIG. 9 shows an example wherein the liquid cry stal and polymers are oriented perpendicularly with respect to the substrate surface. Here, the basic principle is explained using a ¼-wavelength plate as the optical phase shift plate in a system in which a dichroic dye is mixed with the liquid crystal and a chiral component is not used.

First, in FIG. 8, the vertically and horizontally polarized components of the incident light may be considered separately. Here it is assumed that liquid crystal/polymer layer 17 is oriented in horizontal direction 16. Also, the direction of orientation of ¼-wavelength plate 21 is disposed such that it is inclined 45 degrees with respect to the direction of orientation of the liquid crystal/polymer layer.

When no electric field is applied, the vertically polarized light is not absorbed by the dye, passes through liquid crystal/polymer layer 17, passes through ¼-wavelength plate 21, is reflected or scattered, and passes again through ¼-wavelength plate 21, whereby its polarization plane is rotated 90 degrees. Therefore, absorption by the dye in the liquid crystal/polymer layer occurs this time and reflected light is not emitted to the front. The horizontally polarized light, however, is absorbed by the dichroic dye in the liquid crystal/polymer layer.

When an electric field is then applied, absorption by the dichroic dye decreases. When vertically polarized light strikes the element at this time, it passes through the liquid crystal/polymer layer, passes through ¼-wavelength plate 21, is reflected or scattered, and passes again through ¼-wavelength plate 21, whereby its polarization plane is rotated 90 degrees. Therefore, this time the light is scattered in the liquid crystal/polymer layer. When horizontally polarized light strikes the element, light scattering occurs in the liquid crystal/polymer layer. By this means, all of the polarized light, i.e., natural light, can be efficiently modulated by the display element.

FIG. 9 is explained next. Here, liquid crystal/polymer layer 17 is vertically oriented (16) being only slightly inclined toward horizontal direction 23 with respect to the substrate surface. ¼-wavelength plate 21 is disposed such that it is inclined 45 degrees with respect to the horizontal direction.

When no electric field is applied, neither the vertically polarized light nor horizontally polarized light are scattered and absorbed, resulting in them being scattered or reflected back.

When an electric field is applied, the liquid crystal and dichroic dye becomes mainly oriented in horizontal direction 23. When vertically polarized light strikes the element at this time, it passes through the liquid crystal/polymer layer, passes through the ¼-wavelength plate, is either scattered or reflected, and passes through the ¼-wavelength plate again. Since the polarization plane is rotated 90 degrees at this time, the polarized light is both absorbed by the dye in the liquid crystal/polymer layer and scattered at the liquid crystal/polymer interface. When horizontally oriented light strikes the element, it is both absorbed by the dichroic dye in the liquid crystal/polymer layer and scattered at the liquid crystal/polymer interface. By this means, all of the polarized light, i.e., natural light, can be effectively modulated.

The above configuration can be applied to all of the embodiments of the invention. For example, it can be applied even if a chiral component is mixed in, or it can be applied to a system in which a dichroic dye is not mixed in, thus increasing the scattering strength. Of course, it is also possible to combine it with active elements to form a large capacity display or to combine it with a color filter to perform color display.

### Fifteenth Embodiment

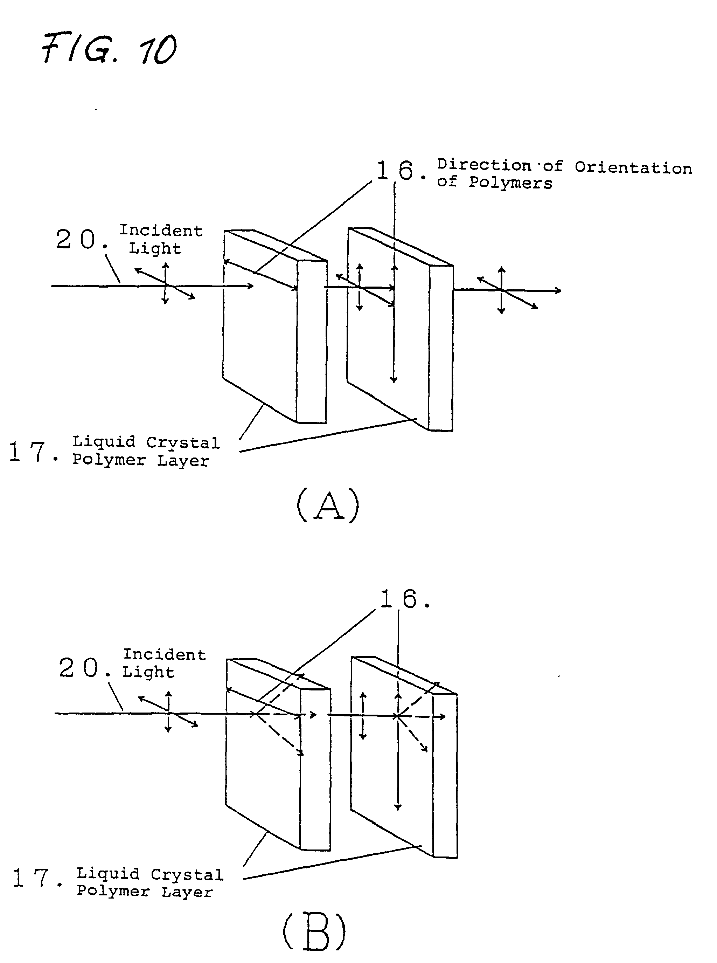

In this embodiment, an example is shown wherein two of the display elements of the above embodiment are put together. The configuration of this embodiment is shown in FIG. 10. Here, two of the horizontally oriented display elements are mated together such that their orientation directions are perpendicular to each other. Regarding the operating principle, one more display element is disposed in place of the optical phase shift plate and reflection plate in the fourteenth embodiment such that the directions of orientation are perpendicular to each other, and the display element operates in the same manner. That is, since the scattering characteristic of the display element of the invention in which there is no or very little chiral component is dependent on polarization when an electric field is applied, the polarized light, which passes through the first display element without being scattered, is scattered by the second display element, which is disposed such that it does scatter light, whereby all polarized light, i.e., natural light, can be efficiently modulated.

The above configuration can be applied to all of the embodiments of the invention. For example, it can be applied even if a chiral component is mixed in, or it can be applied to a system in which a dichroic dye is not mixed in, thus increasing the scattering strength. Of course, it is also possible to combine it with active elements to form a large capacity display or to combine it with a color filter to perform color display.

The compounds shown in all of the above embodiments can be mixed with compounds in other embodiments and used. Often, the resulting electro-optical characteristics are midway between the characteristics when the respective compounds are used separately.

When a non-reflective layer or a reflective scattering layer is provided on the display element surface in all of the above embodiments, the display becomes easier to view.

A display element in which particularly no or very little chiral component is mixed in has a polarization characteristic in all of the above embodiments, and therefore it can be used as an electric field control type polarization element.

### Applicability to Industry

As described above, the display element of the invention makes reflective type display elements, which were dark and difficult to view in the prior art, bright and easy to view, and it also facilitates the combination of active elements, which was difficult in the prior art, thus facilitating the production of large capacity reflective type displays. Color display is also possible. This display element also makes possible reflective type full color, large capacity displays for computer terminals and reflective type wall-mounted televisions. This display element can also be used as an electric field control type polarization element by means of a simple method.

## Claims

1. Display element comprising liquid crystal (4) and polymers (3) dispersed in the liquid crystal and oriented by orientation treatment of at least one substrate surface, said polymers formed by polymerizing polymer precursors containing one or more polymerizing parts and two or more aromatic rings, wherein said polymer precursors contain as at least one component any one of
a polymer compound without an alkyl group spacer between said polymerizing part and aromatic rings and having at least two aromatic rings and an ester group between the aromatic rings,
a polymer compound without an alkyl group spacer between said polymerizing part and aromatic rings and having at least two aromatic rings and a urethane group or amide group between the aromatic rings,
a polymer compound without an alkyl group spacer between said polymerizing part and aromatic rings and having at least two aromatic rings and at least one acetylene group between the aromatic rings,
a polymer compound without an alkyl group spacer between said polymerizing part and aromatic rings and having an alkyl group bonded either directly or indirectly to said aromatic rings,
a polymer compound without an alkyl group spacer between said polymerizing part and aromatic rings and having at least one of a cyano group, halogen group without fluorine or aromatic ring bonded either directly or indirectly to said aromatic rings, and
an optically active polymer compound without an alkyl group spacer between said polymerizing part and aromatic rings.

2. The display element of claim 1 wherein said polymer precursors are an ester derivative with methacrylic acid or acrylic acid.

3. The display element of claim 1 wherein said polymer precursors are an amide derivative with methacrylic acid or acrylic acid.

4. The display element of claim 1 wherein said polymer precursors are a compound having an epoxy group.

5. The display element of claim 1 wherein dichroic dye is contained in said liquid crystal.

6. The display element of claim 1 wherein a chiral component is contained in said liquid crystal.

7. The display element of claim 1 wherein a light-reflective layer (20) or light diffusion layer (20) is disposed on the rear surface of said liquid crystal and polymer layer.

8. The display element of claim 1 wherein active elements (7, 8, 9), e.g., two-terminal elements or three-terminal elements, are formed on at least one of the substrates (1, 6) between which said liquid crystal and polymer layer is sandwiched.

9. A method of manufacturing the display element of claim 1 wherein said polymers are formed from a mixture of said polymer precursors and liquid crystal in a liquid crystal phase by at least one of the stimuli light, electron beam and heat.

10. A method of manufacturing the display element of claim 1 wherein said polymers are formed by polymerizing said polymer precursors in advance, making them compatible with said liquid crystal by using a solvent and spreading them on the substrate, after which the solvent is removed at a rate slow enough such that the polymers precipitate out while orienting along the liquid crystal.

## Patentansprüche

1. Anzeigeelement, umfassend einen Flüssigkristall (4) und Polymere (3), die im Flüssigkristall dispergiert und durch Orientierungsbehandlung mindestens einer Substratoberfläche orientiert sind, wobei die durch Polymerisation von Polymervorläufern gebildeten Polymeren einen oder mehrere polymerisierende Teile und zwei oder mehr aromatische Ringe umfassen, wobei die Polymervorläufer mindestens eine der folgenden Komponenten enthalten:
eine Polymerverbindung ohne einen Alkylgruppen-Abstandshalter zwischen dem polymerisierenden Teil und den aromatischen Ringen und mit mindestens zwei aromatischen Ringen und einer Estergruppe zwischen den aromatischen Ringen,
eine Polymerverbindung ohne einen Alkylgruppen-Abstandshalter zwischen dem polymerisierenden Teil und den aromatischen Ringen und mit mindestens zwei aromatischen Ringen und einer Urethangruppe oder einer Amidgruppe zwischen den aromatischen Ringen,
eine Polymerverbindung ohne einen Alkylgruppen-Abstandshalter zwischen dem polymerisierenden Teil und den aromatischen Ringen und mit mindestens zwei aromatischen Ringen und mindestens einer Acetylengruppe zwischen den aromatischen Ringen,
eine Polymerverbindung ohne einen Alkylgruppen-Abstandshalter zwischen dem polymerisierenden Teil und den aromatischen Ringen und mit einer Alkylgruppe, die entweder direkt oder indirekt an die aromatischen Ringe gebunden ist,
eine Polymerverbindung ohne einen Alkylgruppen-Abstandshalter zwischen dem polymerisierenden Teil und den aromatischen Ringen und mit mindestens einer Cyanogruppe, Halogengruppe mit Ausnahme von Fluor oder einem aromatischen Ring, die direkt oder indirekt an die aromatischen Ringe gebunden sind, und
eine optisch aktive Polymerverbindung ohne einen Alkylgruppen-Abstandshalter zwischen dem polymerisierenden Teil und den aromatischen Ringen.

2. Anzeigeelement nach Anspruch 1, wobei es sich bei den Polymervorläufern um ein Esterderivat von Methacrylsäure oder Acrylsäure handelt.

3. Anzeigeelement nach Anspruch 1, wobei es sich bei den Polymervorläufern um ein Amidderivat von Methacrylsäure oder Acrylsäure handelt.

4. Anzeigeelement nach Anspruch 1, wobei es sich bei den Polymervorläufern um eine Verbindung mit einer Epoxygruppe handelt.

5. Anzeigeelement nach Anspruch 1, wobei ein dichroitischer Farbstoff im Flüssigkristall enthalten ist.

6. Anzeigeelement nach Anspruch 1, wobei eine chirale Komponente im Flüssigkristall enthalten ist.

7. Anzeigeelement nach Anspruch 1, wobei eine Lichtreflexionsschicht (20) oder eine Lichtstreuschicht (20) an der rückwärtigen Oberfläche der Flüssigkristall- und Polymer-Schicht angeordnet ist.

8. Anzeigeelement nach Anspruch 1, wobei aktive Elemente (7, 8, 9), z. B. zweipolige Elemente oder dreipolige Elemente, auf mindestens einem der Substrate (1, 6), zwischen denen die Flüssigkristall- und Polymer-Schicht sandwichartig angeordnet ist, ausgebildet sind.

9. Verfahren zur Herstellung des Anzeigeelements nach Anspruch 1, wobei die Polymeren aus einem Gemisch der Polymervorläufer und des Flüssigkristalls in einer Flüssigkristallphase unter Anregung mit Licht, Elektronenstrahlen und/oder Wärme gebildet werden.

10. Verfahren zur Herstellung des Anzeigeelements nach Anspruch 1, wobei die Polymeren durch vorheriges Polymerisieren der Polymervorläufer gebildet werden, wobei sie mit dem Flüssigkristall unter Verwendung eines Lösungsmittels verträglich gemacht und auf das Substrat aufgetragen werden, wonach das Lösungsmittel mit einer ausreichend langsamen Geschwindigkeit entfernt wird, so dass die Polymeren unter Orientierung entlang des Flüssigkristalls ausfallen.

## Revendications

1. Elément d'affichage comprenant un cristal liquide (4) et des polymères (3) dispersés dans le cristal liquide et orientés par un traitement d'orientation d'au moins une surface de substrat, les polymères formés en polymérisant des précurseurs de polymère contenant une partie de polymérisation ou plusieurs parties de polymérisation et deux cycles aromatiques ou plusieurs cycles aromatiques, les précurseurs de polymère contenant en tant que au moins un constituant l'un quelconque de
un polymère sans groupe alcoyle intercalaire entre la partie de polymérisation et les cycles aromatiques et ayant au moins deux cycles aromatiques et un groupe ester entre les cycles aromatiques,
un polymère sans groupe alcoyle intercalaire entre la partie de polymérisation et les cycles aromatiques et ayant au moins deux cycles aromatiques et un groupe uréthane ou un groupe amide entre les cycles aromatiques,
- un polymère sans groupe alcoyle intercalaire entre la partie de polymérisation et les cycles aromatiques et ayant au moins deux cycles aromatiques et au moins un groupe acétylène entre les cycles aromatiques,
un polymère sans groupe alcoyle intercalaire entre la partie de polymérisation et les cycles aromatiques et ayant un groupe alcoyle relié soit directement soit indirectement aux cycles aromatiques,
un polymère sans groupe alcoyle intercalaire entre la partie de polymérisation et les cycles aromatiques et ayant au moins l'un d'un groupe cyano, d'un groupe halogène sans le fluor ou d'un cycle aromatique relié soit directement soit indirectement aux cycles aromatiques et
un polymère optiquement actif sans groupe alcoyle intercalaire entre la partie de polymérisation et les cycles aromatiques.

2. Elément d'affichage suivant la revendication 1, dans lequel les précurseurs de polymère sont un dérivé d'ester de l'acide méthacrylique ou de l'acide acrylique.

3. Elément d'affichage suivant la revendication 1, dans lequel les précurseurs de polymère sont un dérivé d'amide de l'acide méthacrylique ou de l'acide acrylique.

4. Elément d'affichage suivant la revendication 1, dans lequel les précurseurs de polymère sont un composé ayant un groupe époxy.

5. Elément d'affichage suivant la revendication 1, dans lequel un colorant dichroïque est contenu dans le cristal liquide.

6. Elément d'affichage suivant la revendication 1, dans lequel un constituant chiral est contenu dans le cristal liquide.

7. Elément d'affichage suivant la revendication 1, dans lequel une couche (20) réfléchissant la lumière ou une couche (20) diffusant la lumière est disposée sur la face arrière du cristal liquide et de la couche de polymère.

8. Elément d'affichage suivant la revendication 1, dans lequel les éléments (7, 8, 9) actifs, par exemple des éléments à deux bornes ou des éléments à trois bornes, sont formés sur au moins l'un des substrats (1, 6) entre lesquels le cristal liquide et la couche de polymère sont pris en sandwich.

9. Procédé de production de l'élément d'affichage de la revendication 1, dans lequel les polymères sont formés à partir d'un mélange de précurseurs de polymère et de cristal liquide dans une phase de cristal liquide par au moins l'un de la lumière de stimulation, d'un faisceau d'électrons et de la chaleur.

10. Procédé de production de l'élément d'affichage de la revendication 1, dans lequel les polymères sont formés en polymérisant les précurseurs de polymère à l'avance en les rendant compatibles avec le cristal liquide en utilisant un solvant et en les étalant sur le substrat après quoi le solvant est éliminé à une vitesse suffisamment petite pour que les polymères précipitent tout en s'orientant le long du cristal liquide.
